Europäisches Patentamt

European Patent Office

Office européen des brevets

(11) Veröffentlichungsnummer: **0 354 897**
**A1**

(12) **EUROPÄISCHE PATENTANMELDUNG**

(21) Anmeldenummer: **89890208.5**

(22) Anmeldetag: **04.08.89**

(51) Int. Cl.5: **C 21 C 7/00**

(30) Priorität: **08.08.88 AT 1996/88**

(43) Veröffentlichungstag der Anmeldung:
**14.02.90 Patentblatt 90/07**

(84) Benannte Vertragsstaaten:
**AT BE CH DE ES FR GB GR IT LI LU NL SE**

(71) Anmelder: **VOEST-ALPINE STAHL DONAWITZ
GESELLSCHAFT M.B.H.
Pestalozzistrasse 128 Postfach 1
A-8700 Leoben-Donawitz (AT)**

(72) Erfinder: **Mitter, Gerhard, Prok.Dir.Dipl.Ing.Dr.
Nelkengasse 15
A-4050 Traun (AT)**

**Pochmarski, Luzian, Dipl.-Ing.
Roseggerstrasse 27
A-8700 Leoben (AT)**

**Köller, Otto, Dipl.-Ing.
Kerpelystrasse 83
A-8704 Leoben (AT)**

(74) Vertreter: **Haffner, Thomas M., Dr. et al
Patentanwaltskanzlei Dipl.-Ing. Adolf Kretschmer Dr.
Thomas M. Haffner Schottengasse 3a
A-1014 Wien (AT)**

(54) **Verfahren zum Erwärmen von Stahlschmelzen sowie Vorrichtung zur Durchführung dieses Verfahrens.**

(57) Bei einer Vorrichtung zur Durchführung des Verfahrens zum Erwärmen von Stahlschmelzen, welche mit eisenoxidreicher Schlacke (7) bedeckt sind, insbesondere für kontinuierliche Stahlerzeugungsprozesse, wie z.B. das KVA-Verfahren, unter Verwendung metallothermischer Wärme wird eine Einblaslanze (12) für die Zufuhr von mit dem Bad und dem Schlackensauerstoff exotherm reagierenden Metallen, höhenverstellbar angeordnet. Die Mündung der Einblaslanze (12) ist über die Füllhöhe der Pfanne (3) im Bereich der Phasengrenzfläche (14) Bad/Schlacke verstellbar.

EP 0 354 897 A1

## Beschreibung

### Verfahren zum Erwärmen von Stahlschmelzen sowie Vorrichtung zur Durchführung dieses Verfahrens

Die Erfindung bezieht sich auf ein Verfahren zum Erwärmen von Stahlschmelzen, welche mit eisenoxidreicher Schlacke bedeckt sind, insbesondere für kontinuierliche Stahlerzeugungsprozesse, wie z.B. das KVA-Verfahren unter Verwendung metallothermischer Wärme, sowie für die Vorrichtung zur Durchführung dieses Verfahrens.

Bei kontinuierlich arbeitenden Stahlherstellungsverfahren, insbesondere beim KVA-Verfahren, läuft ein Metall/Schlackegemisch, welches nur schwach über Liquidus erhitzt ist, in ein Auffanggefäß.

Um ein Erstarren des kontinuierlich zufließenden Stahles in der Auffangpfanne und damit eine Schalenbildung und Erstarren der Schmelze bei längerem Verweilen im Gefäß zu verhindern, muß, selbst wenn diese hoch aufgeheizt ist, zusätzliche Wärme zur Überhitzung eingebracht werden.

Zusätzliche Wärme kann durch Beheizen der Pfanne oder unter anderem durch Zugabe von exotherm wirkenden Stoffen in das kontinuierlich einfließende Metall/Schlackegemisch eingebracht werden.

Unter Verwendung von silikothermischen Prozessen tritt eine Überhitzung durch die Reaktion von FeSi mit dem FeO und CaO der Schlacke ein, so daß eine überhitzte Schlacke entsteht, welche den Großteil der aufgenommenen Wärme an das Stahlbad abgibt.

Die Erfindung zielt nun darauf ab, die bei silikothermischen Prozessen und allgemein bei metallothermischen Prozessen in der Schlacke entstehende Wärme besser und effizienter an das Stahlbad abzugeben. Zur Lösung dieser Aufgabe besteht das erfindungsgemäße Verfahren im wesentlichen darin, daß mit dem Bad- und dem Schlackensauerstoff exotherm reagierende Metalle, gegebenenfalls mit Schlackenbildnern in den Phasengrenzbereich zwischen Bad und Schlacke eingeblasen werden. Dadurch, daß mit dem Bad und dem Schlackensauerstoff exotherm reagierende Metalle, gegebenenfalls mit Schlackenbildnern in den Phasengrenzbereich eingeblasen werden, wird der Großteil der Reaktionswärme im Phasengrenzbereich erzeugt und unmittelbar an das darunterliegende Bad abgegeben. Es wird somit bei gleichem Wärmeeinbringen eine höhere Überhitzung des Bades und eine geringere Überhitzung der gesamten Schlackenmenge erzielt. Dadurch, daß der Großteil der Wärme durch metallothermische Reaktionen im Phasengrenzbereich erzeugt wird, wird die sichere Trennung von Schlacke und Bad nur in sehr geringem Maße beeinträchtigt. Die für das Einblasen der Metalle eingesetzte Trägergasmenge durchperlt die Schlacke, nicht aber das gesamte Bad, so daß eine komplette Durchmischung von Bad und Schlacke vermieden wird, wodurch die Schichtung, wie sie zwischen Schlacke und Bad besteht, nicht zerstört wird. Als Trägergas kommen hiebei Inertgase, wie beispielsweise Stickstoff oder Argon in Betracht, wobei gemeinsam mit derartigen Trägergasen auch Schlackenbildner eingeblasen werden können, um die Schlackenbildung zu verbessern und das Eisenausbringen zu erhöhen. Durch die Reaktion der metallothermisch wirkenden Metalle, wie beispielsweise Aluminium oder Silicium oder ein Ferrosilicium, deren Gemische oder Legierungen, mit der Schlacke wird Eisenoxid teilweise reduziert, so daß das Eisenausbringen verbessert wird.

Um nun in einfacher Weise sicherzustellen, daß das Einblasen von mit dem Bad und dem Schlackensauerstoff exotherm reagierenden Metallen tatsächlich auf den Phasengrenzbereich beschränkt bleibt, ist eine erfindungsgemäße Vorrichtung zur Durchführung dieses Verfahrens mit Vorteil so ausgebildet, daß eine Einblaslanze höhenverstellbar angeordnet ist, deren Mündung über die Füllhöhe der Pfanne im Bereich der Phasengrenzfläche Bad/Schlacke verstellbar ist. Bei einer derartigen höhenverstellbar angeordneten Lanze kann die Lanze prinzipiell sowohl von oben als auch von unten in die Auffangpfanne eingetaucht werden, wobei allerdings ein Eintauchen der Lanze von oben mit Rücksicht auf die Dichtungsprobleme bei einem Einführen der Lanze von unten bevorzugt ist. Bei einer derartigen Ausführung können Materialien für die Lanze gewählt werden, welche sowohl bei der Temperatur der Schmelze als auch bei der Temperatur der Schlacke beständig bleiben, wobei allerdings eine entsprechende Steuerung für den Hub der Lanze vorgesehen sein muß, um die Mündung bei ansteigendem Badspiegel in der Auffangpfanne im Bereich der Phasengrenze zwischen Bad und Schlacke zu erhalten.

In besonders einfacher Weise kann die erfindungsgemäße Vorrichtung so ausgebildet sein, daß eine Einblaslanze aus einem bei der Temperatur der Schlacke beständigen und bei der Temperatur des Bades schmelzenden Material, insbesondere Reineisen oder niedriggekohltem Stahl, oberhalb der Pfanne gelagert ist, deren Mündung nahe dem Pfannenboden liegt und mit steigendem Badspiegel durch Abschmelzen im Bereich der jeweiligen Phasengrenze Bad/Schlacke verbleibt. Eine derartige selbstverzehrende Lanze wird hiebei so ausgebildet, daß sie bei ansteigendem Badspiegel automatisch mit ihrer Mündung im Bereich der Phasengrenze zwischen Bad und Schlacke verbleibt, so daß eine komplizierte Steuerung für den Hub der Lanze entbehrlich ist. Am Beginn des Abgießens von Stahlschlackegemischen in die Auffangpfanne wird hiebei das Einblasrohr bis auf die maximale Eintauchtiefe eingeschoben und ragt bis nahe dem Boden der Auffangpfanne. Im Verlaufe der kontinuierlichen Füllung der Auffangpfanne schmilzt der in das Stahlbad ragende Teil der Lanze ab, wobei eine gegebenenfalls erforderliche Kühlung, um sicherzustellen, daß die Lanze über den der Schlackenschichtstärke entsprechenden Bereich beständig bleibt, durch Einstellung der Förderleistung der pneumatischen Förderanlage eingestellt werden kann. Zu diesem Zweck ist die Ausbildung mit Vorteil so getroffen, daß an die Lanze eine pneumatische Fördereinrichtung für Feststoffe mit einstellbarer Trägergaszuführungsleistung angeschlossen ist. Mit der Verstellung der Trägergaszuführungsleistung kann zum einen die Kühlleistung eingestellt werden und zum andern die jeweils für die Erwärmung erforderliche Menge an exotherm reagierenden Metallen sicher eingebracht werden. Die Steuerung des Einblasens in einer Weise, daß das eingebrachte, exotherm reagierende Metall ausschließlich in den Bereich der Phasengrenze gebracht wird, verhindert hiebei eine übermäßige Anreicherung des Bades mit exotherm reagierenden Metallen, und es kann durch Steuerung der Trägergaszuführungsleistung eine zu große Eindringtiefe des Strahls in das darunterliegende Bad verhindert werden. Die exotherm reagierenden Metalle können gegebenenfalls in pulverförmigen Mischung zum Einsatz gelangen und gemeinsam mit Schlackenbildnern in Pulverform eingebracht werden, wobei die Reaktion in der Zwischenschicht bzw. Grenzschicht zwischen Schlacke und Stahl eine bessere Wärmeübertragung in das Bad, ohne übermäßige Aufhitzung der gesamten Schlacke sichergestellt. Selbst bei hohen Trägergaszuführungsleistungen erstreckt sich derjenige Bereich, über welchen Gase durchtreten müssen, lediglich auf den Bereich der Schlackenschicht, so daß zwar eine gewisse Durchwirbelung der Schlackenschicht erzielt wird, ohne daß jedoch insgesamt eine stärkere Vermischung von Schlacke und Bad erfolgt.

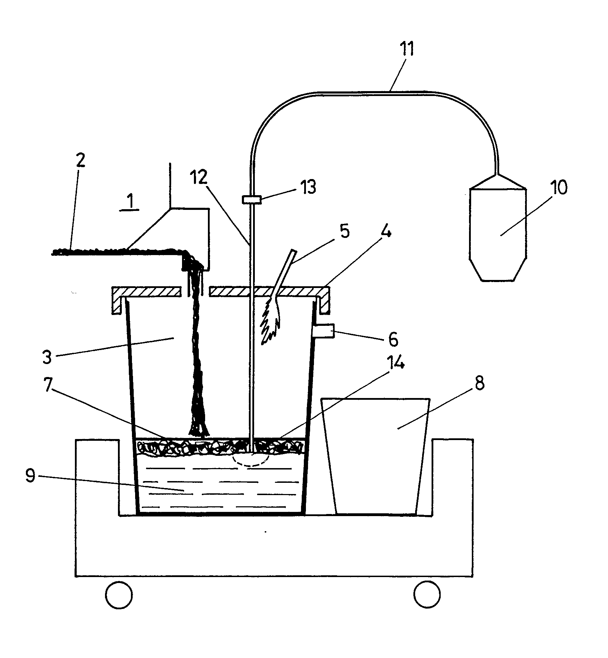

Die Erfindung wird nachfolgend an Hand eines in der Zeichnung dargestellten Ausführungsbeispieles einer Vorrichtung für die Durchführung des erfindungsgemäßen Verfahrens näher erläutert.

In der Zeichnung ist ein Schmelzgefäß schematisch mit 1 angedeutet, aus welchem ein Metall/Schlackengemisch 2 kontinuierlich über die Absticheinheit in eine hoch aufgeheizte, gedeckelte Auffangpfanne 3 abläuft. Der Deckel 4 ist mit einem Deckelbrenner 5 versehen, um auch während des Abstiches die Pfanne beheizen zu können. Die Auffangpfanne 3 verfügt des weiteren über eine Schlackenabflußöffnung 6, durch die die aufschwimmende Schlacke 7, bei Erreichen der Abflußöffnung 6, durch Verdrängung in einen Schlackenkübel 8, abfließt. Bei Erreichen der Abflußöffnung 6 durch den Stahlspiegel 9 wird die Auffangpfanne 3 gegen eine neue ausgetauscht, gleichzeitig natürlich mit dem Schlackenkübel 8.

Um den Stahl zu überhitzen, werden von einer pneumatischen Förderanlage 10 aus, über eine Zuführungsleitung 11, pulverförmige Gemische aus FeSi und Schlackenbildnern, durch eine als Stahlrohr 12 ausgebildete Lanze, welche mittels einer Schnellkupplung 13 an die Zuführungsleitung 11 der pneumatischen Förderanlage 10 angeflanscht ist, in die Zwischenschicht 14 Metall/Schlacke eingeblasen. Der Förderdruck des inerten Fördergases ist so eingestellt, daß ein tiefes Eindringen in das Metall nicht stattfinden kann, so daß die Reaktion auf die Grenzfläche Metall/Schlacke beschränkt wird. Beim Ansteigen der Schlacke 7 und des Stahlspiegels 9 während des kontinuierlichen Abstichs, schmilzt das Stahlrohr 12 ebenfalls kontinuierlich ab, so daß die Position seiner Mündung immer in der Grenzfläche Metall/Schlacke zu liegen kommt. Dies ist deshalb gegeben, da das im Stahlrohr 12 strömende Medium (Inertgas, beladen mit Pulvergemisch FeSi und Schlackenbildnern) das Stahlrohr 12 gegen das Aufschmelzen in der Schlacke schützt, im Stahlbad jedoch nicht.

Die pneumatische Förderanlage 10 ist so ausgelegt, daß die Zufuhrgeschwindigkeit der Medien auf die Geschwindigkeit des kontinuierlichen Abstichvorganges, der betrieblich in gewissen Grenzen schwanken kann, einstellbar ist. Ebenso ist es möglich, die Zufuhrgeschwindigkeit der Medien bei Auftreten von unerwünschten Kochreaktionen, sprunghaft zu steigern, um diese zu unterbinden.

Es ist ebenso möglich, aus zwei getrennten Bunkern der pneumatischen Förderanlage 10, sukzessive zu arbeiten, wobei in einem Bunker reines FeSi-Pulver, im anderen Bunker Schlackenbildner in Pulverform vorrätig sind.

Der metallothermisch ablaufende Prozeß, bei welchem durch Einblasen eines pulverförmigen, mit der Schlacke, insbesondere dem FeO und CaO dieser Schlacke, exotherm reagierenden Metalls Wärme erzeugt wird, führt hiebei zu einer Reduktion des FeO-Gehaltes der Schlacken, wobei die Schlackenpulvergemische zur Schlackenverflüssigung und/oder zum besseren Ablauf der Reaktionen mitgefördert werden können.

## Patentansprüche

1. Verfahren zum Erwärmen von Stahlschmelzen, welche mit eisenoxidreicher Schlacke (7) bedeckt sind, insbesondere für kontinuierliche Stahlerzeugungsprozesse, wie z.B. das KVA-Verfahren, unter Verwendung metallothermischer Wärme, dadurch gekennzeichnet, daß mit dem Bad und dem Schlackensauerstoff exotherm reagierende Metalle, gegebenenfalls mit Schlackenbildnern, in den Phasengrenzbereich (14) zwischen Bad und Schlacke eingeblasen werden.

2. Vorrichtung zur Durchführung des Verfahrens nach Anspruch 1, dadurch gekennzeichnet, daß eine Einblaslanze (12) höhenverstellbar angeordnet ist, deren Mündung über die Füllhöhe der Pfanne (3) im Bereich der Phasengrenzfläche (14) Bad/Schlacke verstellbar ist.

3. Vorichtung zur Durchführung des Verfahrens nach Anspruch 1, dadurch gekennzeichnet, daß eine Einblaslanze (12) aus einem bei der Temperatur der Schlacke (7) beständigen und bei der Temperatur des Bades schmelzenden Material, insbesondere Reineisen oder niedriggekohltem Stahl, oberhalb der Pfanne (3) gelagert ist, deren Mündung nahe dem Pfannenboden liegt und mit steigendem Badspiegel durch Abschmelzen im Bereich der jeweiligen Phasengrenze (14) Bad/Schlacke verbleibt.

4. Vorrichtung nach Anspruch 2 oder 3, dadurch gekennzeichnet, daß an die Lanze (12) eine pneumatische Fördereinrichtung (10) für Feststoffe mit einstellbarer Trägergaszufüh-

rungsleistung angeschlossen ist.

Europäisches Patentamt

**EUROPÄISCHER RECHERCHENBERICHT**

Nummer der Anmeldung

EP 89 89 0208

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-2 326 174 (KLOECKNER-WERKE AG) <br> * Spalte 4, Zeilen 49-56 * <br> --- | 1 | C 21 C 7/00 |
| A | US-A-3 891 196 (E. FOERSTER et al.) <br> * Figur 1 * <br> --- | 2,4 | |
| A | DE-B-2 141 176 (MESSER GRIESHEIM GMBH) <br> * Anspruch 1 * <br> --- | 3 | |
| A | DE-B-2 827 277 (OUTOKUMPU) <br> * Spalte 8, Zeilen 47-54 * <br> --- | 2,3 | |
| A | DE-C- 184 515 (A. M. DAY) <br> ----- | | |

**RECHERCHIERTE SACHGEBIETE (Int. Cl.5)**

C 21 C 7/00

Der vorliegende Recherchenbericht wurde für alle Patentansprüche erstellt

| Recherchenort | Abschlußdatum der Recherche | Prüfer |
|---|---|---|
| BERLIN | 29-09-1989 | SUTOR W |